# EUROPEAN PATENT APPLICATION

(11) **EP 4 011 195 A1**
(43) Date of publication of application: **15.06.2022**
(21) Application number: 20850925.7
(22) Date of filing: 27.05.2020
(51) Int. Cl.: A01G 9/02, A01G 9/20, A01G 9/24, A01G 31/00

(54) **PLANT CULTIVATION DEVICE**

(30) Priority: 06.08.2019 JP 2019144405
(71) Applicant: PLANTX CORP., Kashiwa-shi, Chiba 277-8520 (JP)
(72) Inventor: AKIYAMA, Takuji, Kashiwa-shi, Chiba 277-8520 (JP); SAKAGUCHI, Shunsuke, Kashiwa-shi, Chiba 277-8520 (JP); OHSHIMA, Kazutaka, Kashiwa-shi, Chiba 277-8520 (JP)
(74) Representative: HGF
(86) International application number: PCT/JP2020/020914
(87) International publication number: WO 2021/024583

(57) **Abstract**

Provided is a plant cultivation device wherein the occurrence of tipburn is suppressed. This artificial light-type plant cultivation device 1 is provided with a cultivation chamber 4, the inside of which can be sealed. Within the cultivation chamber 4, the plant cultivation device is provided with: a cultivation room 10 for growing a plant; and an air circulation system 30 for generating an air flow from top to bottom in the cultivation room 10. Since the air circulation system 30 can blow air to a plant V from directly above, air is blown to new leaves growing in a central portion of the plant to promote transpiration. As a result, sufficient calcium can be supplied to the growing leaves and tipburn is less likely to occur.

## Description

### TECHNICAL FIELD

The present invention relates to a plant cultivation device used in an artificial light-type plant factory.

### BACKGROUND ART

Plant factories are attracting attention as a solution to problems such as food shortages due to global population growth and a decrease in agricultural production due to a decrease in rural population with aging in developed countries such as Japan.

Plant factories are roughly divided into two types: fully artificial light type and sunlight utilization type. In the fully artificial light type, the plants are cultivated using only an artificial light source without using sunlight in an isolated environment. In the sunlight utilization type, which is based on utilization of sunlight in an environment isolated to a greenhouse, the plants are cultivated using light supplement with artificial light or high temperature control technology in summer.

In a general fully artificial light type plant factory, a cultivation chamber including an artificial light source is arranged. The inside of the cultivation chamber is illuminated by the artificial light source, and air is circulated in a lateral direction by an air conditioner, and temperature and humidity are controlled to desired values, thereby increasing growth efficiency of plants (see Patent Document 1).

Patent Document 1: Japanese Unexamined Patent Application, Publication No. 2002-291349

### DISCLOSURE OF THE INVENTION

### Problems to be Solved by the Invention

However, when the growth efficiency of plants is increased, tipburn becomes a problem in leafy vegetables such as lettuce. Tipburn is a growth disorder of vegetables caused by calcium deficiency during rapid growth. Vegetables with tipburn have brown buds and wither, resulting in reduction of commercial value.

An object of the present invention is to provide a plant cultivation device capable of preventing occurrence of tipburn.

### Means for Solving the Problems

In order to solve the above problems, the present invention provides a plant cultivation device that is an artificial light-type plant cultivation device, the plant cultivation device including a cultivation chamber having a closable inside, the cultivation chamber including therein: a cultivation room for cultivating plants; and an air circulation system that generates an air flow flowing from top to bottom in the cultivation room.

Preferably, the plant cultivation device further includes a lighting device that illuminates the cultivation room, wherein the air circulation system includes an exhaust fan that exhausts air from the cultivation room, an air supply fan that supplies the air to the cultivation room, and a plurality of air blowing pipes extending on an upper part of the cultivation room and provided with a plurality of air blowing holes for jetting the air supplied from the air supply fan from an upper side toward a lower side of the cultivation room.

Preferably, the air circulation system includes a gas circulation room provided inside the cultivation chamber, the exhaust fan exhausts air from the cultivation room to the gas circulation room, and the air supply fan supplies air from the gas circulation room to the cultivation room.

Preferably, the air circulation system further includes an air conditioner that adjusts the air in the gas circulation room, and the exhaust fan, the air conditioner, and the air supply fan are arranged on one surface side of the cultivation room.

Preferably the lighting device and the air blowing pipes are arranged at the same height.

Preferably, the exhaust fan is provided above the lighting device and the air blowing pipes in the cultivation room.

Preferably, the cultivation room is provided with a cultivation plate having a plurality of plant cultivation holes, and the air blowing holes correspond to the plant cultivation holes, respectively, and are arranged above the plant cultivation holes.

Preferably, the cultivation room is provided with a cultivation container, and a load measuring device that measures a load of the cultivation container while the plants are cultivated.

Preferably, the plant cultivation device further includes a liquid circulation system that circulates a liquid supplied to the cultivation room, wherein the liquid circulation system includes a liquid supply path through which a liquid flows into the cultivation room, and a liquid collection path through which the liquid collected from the cultivation room is collected, and the liquid supply path and the liquid collection path are arranged on one surface side of the cultivation room.

### Effects of the Invention

According to the present invention, it is possible to provide a plant cultivation device capable of preventing occurrence of tipburn.

### BRIEF DESCRIPTION OF THE DRAWINGS

FIG. 1 is a perspective view of a plant cultivation device 1 according to a first embodiment of the present invention in a state where an outer wall 5 is partially cut out.
FIG. 2 is a top view of the plant cultivation device 1 in a state where an upper surface 5T of the outer wall 5 is removed.
FIG. 3 is a block diagram showing a configuration of the plant cultivation device 1.
FIG. 4 is a schematic diagram of a nutrient solution circulation system 40.
FIG. 5 is an exploded perspective view of a cultivation container 11.
FIG. 6 is a partial perspective view of a portion of the plant cultivation device 1 related to an air circulation system 30.
FIG. 7 is a perspective view showing a transport mechanism 80 and a load measuring device 70 of the plant cultivation device 1.
FIG. 8 is a schematic diagram of a plant cultivation device 101 of a second embodiment of the present invention in a state where the outer wall 5 is removed. and
FIG. 9 is a schematic diagram of a plant cultivation device 201 of a third embodiment of the present invention in a state where the outer wall 5 is removed.

### PREFERRED MODE FOR CARRYING OUT THE INVENTION

### (First Embodiment)

### (Plant Cultivation Device 1)

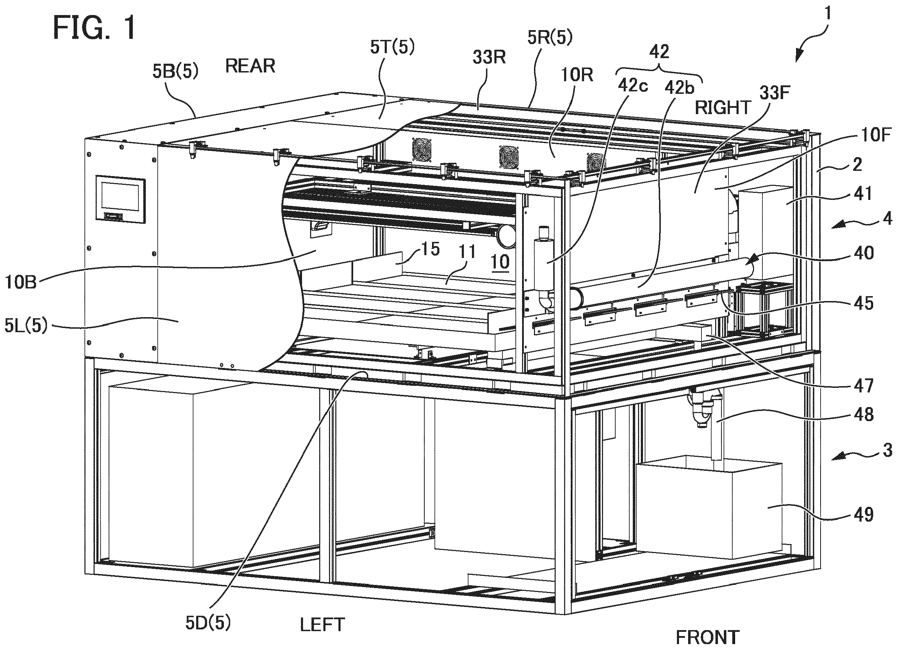

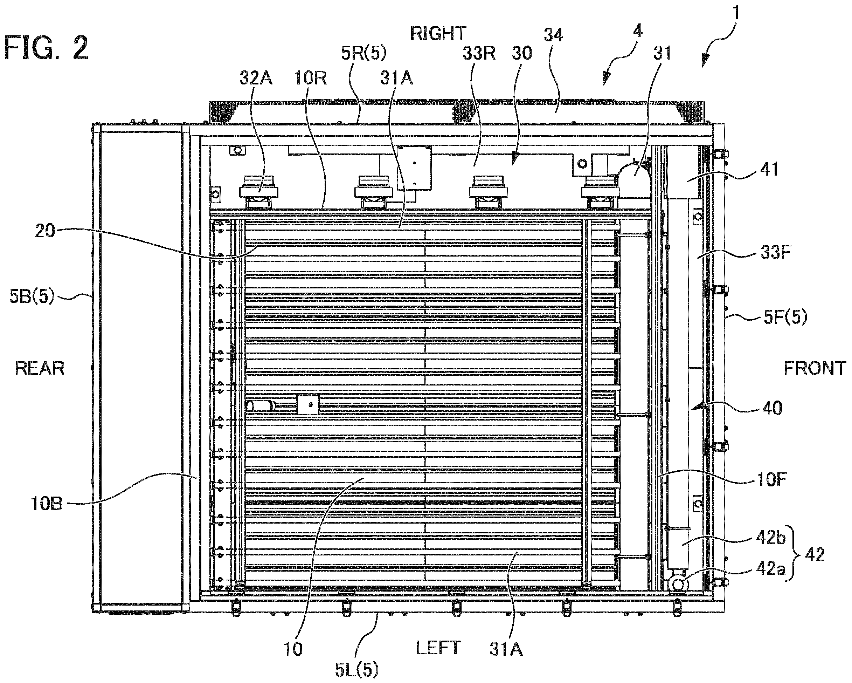

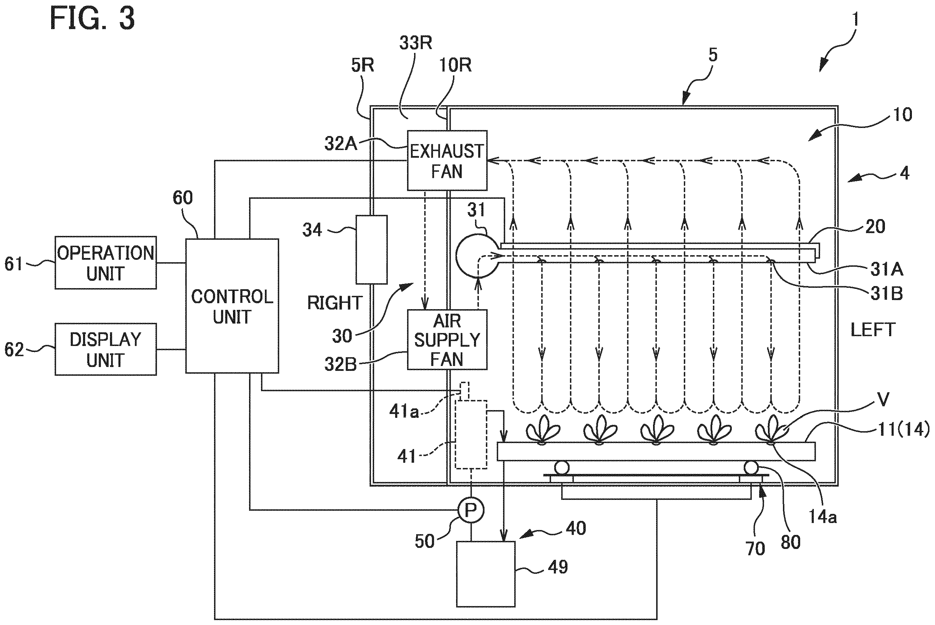

A plant cultivation device 1 of a first embodiment of the present invention will be described below. FIG. 1 is a perspective view of the plant cultivation device 1 in a state where an outer wall 5 is partially cut out. FIG. 2 is a top view of the plant cultivation device 1 in a state where an upper surface 5T of the outer wall 5 is removed. FIG. 3 is a block diagram showing a configuration of the plant cultivation device 1.

The plant cultivation device 1 is used in an artificial light-type plant factory. The plant cultivation device 1 includes a frame body 2 as a framework, and has a rectangular parallelepiped shape as a whole. The plant cultivation device 1 is provided with a lower space 3 at a lower part and a cultivation chamber 4 surrounded by an outer wall 5 at an upper part. Hereinafter, a description will be given with reference to the drawings in which a side on which a nutrient solution circulation room 33F to be described below is provided in the plant cultivation device 1 indicates a front, an opposite side thereof indicates a rear, a left side as viewed from the front indicates a left, and a right side as viewed from the front indicates a right.

### (Cultivation Chamber 4)

The cultivation chamber 4 is closed such that an inside is openable and closable by the outer wall 5, and is isolated from the outside. In other words, a temperature, an air flow, and brightness in the cultivation chamber 4 can be controlled independently of the outside, and thus a cultivation environment can be maintained independently of an environment of a work room in the plant factory in which the plant cultivation device 1 is arranged.

The closed state is a state of being isolated to the extent that air does not flow out or outside air does not flow in, and mixing of insects does not also occur when the cultivation chamber 4 is closed by the outer wall 5.

As a material of the outer wall 5, it is preferable to use a non-light transmissive heat insulating material so that the cultivation chamber 4 inside the outer wall 5 is not easily affected by the external environment.

The cultivation chamber 4 of the plant cultivation device 1 of the embodiment has a single stage, but the plant cultivation device 1 may be provided a multi-stage cultivation chamber 4, and may be provided with a plurality of cultivation chambers 4 in a single stage. In this case, the cultivation chambers 4 are isolated from each other, and the internal temperature, air flow, and brightness can be independently controlled.

A cultivation room 10 is provided inside the cultivation chamber 4 surrounded by the outer wall 5 to cultivate plants. In the embodiment, the cultivation room 10 is surrounded by six surfaces of a front wall 10F, a right wall 10R, a rear wall 10B, a left surface 5L of the outer wall 5, a bottom surface 5D of the outer wall 5, and an upper surface 5T of the outer wall 5.

A space between a right surface 5R of the outer wall 5 and a right wall 10R of the cultivation room 10 is a gas circulation room 33R. A space between a front surface 5F of the outer wall 5 and a front wall 10F of the cultivation room 10 is a nutrient solution circulation room 33F.

The plant cultivation device 1 further includes a nutrient solution circulation system 40, an air circulation system 30, a control unit 60, an operation unit 61, a display unit 62, a lighting device 20, and a load measuring device 70.

### (Nutrient Solution Circulation System 40)

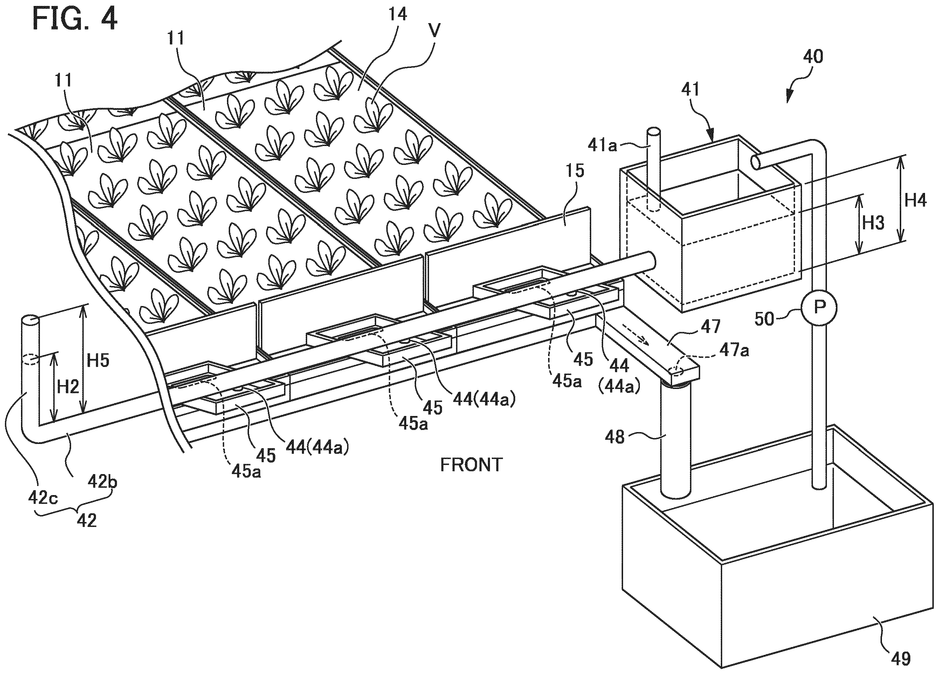

FIG. 4 is a schematic diagram of the nutrient solution circulation system 40. The nutrient solution circulation system 40 is a device that circulates a nutrient solution that is a liquid necessary for growth of the plants. In the embodiment, the nutrient solution containing nutrients necessary for cultivation of the plants circulates, but another fluid, for example, water may be used without being limited the nutrient solution.

As shown in FIGS. 1 and 2, the nutrient solution circulation system 40 is arranged on one side, that is, a front side of the plant cultivation device 1.

The nutrient solution circulation system 40 includes a nutrient solution storage tank 41 that stores the nutrient solution and a nutrient solution supply pipe 42, as a nutrient solution supply path, in which one end is connected to a lower part of a side surface of the nutrient solution storage tank 41 and extends in a horizontal direction from the nutrient solution storage tank 41 and the other end is curved upward.

The nutrient solution circulation system 40 further includes a nutrient solution collection groove 46 as a nutrient solution collection path, a groove extending portion 47 extending vertically to a front side of the nutrient solution collection groove 46, and a nutrient solution collection tank 49.

The nutrient solution storage tank 41 is a bottomed container having a rectangular cross section. However, such a shape is not limited to the rectangular cross section, and may be other cross sections such as a circular cross section and the like as long as the bottomed container.

The nutrient solution contained in the nutrient solution storage tank 41 contains nutrients necessary for cultivation of the plants, and the nutrient solution includes a fertilizer containing, as components, calcium, a large amount of elements such as nitrogen, phosphorous, and potassium which are called three elements, and trace elements such as iron and magnesium, for example.

A water level sensor 41a is arranged in the nutrient solution storage tank 41. The water level sensor 41a detects a position of a liquid level of the nutrient solution stored in the nutrient solution storage tank 41, for example, a height H3 from the bottom surface of the nutrient solution storage tank 41, and may be any one of a float type level sensor, an ultrasonic type level sensor, a capacitance type level sensor, and a pressure type level sensor. In the following description, a height means the height from the bottom surface of the nutrient solution storage tank 41. A measurement value of a water level measured by the water level sensor 41a is transmitted to the control unit 60.

The liquid level of the nutrient solution may be kept constant by overflowing of the nutrient solution on the side surface of the nutrient solution storage tank 41 without using the water level sensor. The water drained by the overflowing may be returned to the nutrient solution collection tank 49, or may be drained as it is.

The nutrient solution supply pipe 42 is a round pipe in the embodiment, but not limited thereto, and may have shapes other than the round shape. One end of the nutrient solution supply pipe 42 is coupled to a bottom side of the side surface of the nutrient solution storage tank 41, but may be coupled to the bottom surface without being limited thereto. The nutrient solution supply pipe 42 includes a liquid distribution pipe 42b extending horizontally from the nutrient solution storage tank 41 and a rising portion 42c extending upward from the other end of the liquid distribution pipe 42b in a state of being bent by about 90 degrees with respect to the liquid distribution pipe 42b. In the embodiment, the liquid distribution pipe 42b and the rising portion 42c are formed by bending one nutrient solution supply pipe, but may be formed by joining separate members without being limited thereto.

The rising portion 42c is a release portion in which an upper part is opened to release the internal nutrient solution toward an atmosphere. A height H5 of an upper end of the rising portion 42c is higher than a height H4 of an upper end of a wall of the nutrient solution storage tank 41. In other words, the rising portion 42c extends higher than the nutrient solution storage tank 41.

Since the nutrient solution overflows when the nutrient solution stored in the nutrient solution storage tank 41 exceeds the upper end of the nutrient solution storage tank 41, the height H3 of the liquid level in the nutrient solution storage tank 41 will not be higher than the height H4 of the upper end of the nutrient solution storage tank 41.

Therefore, the height H2 of the liquid level of the nutrient solution in the rising portion 42c is equal to or lower (being equal to or slightly lower when there is pressure loss) than the height H3 of the liquid level of the nutrient solution in the nutrient solution storage tank 41, and thus the nutrient solution does not overflow from the upper end of the rising portion 42c.

A plurality of discharge ports 44 are provided at the same height on a pipe wall of the liquid distribution pipe 42b at a position lower than the height H3 of the liquid level of the nutrient solution in the nutrient solution storage tank 41. In the embodiment, the plurality of discharge ports 44 are holes opened downward and having a predetermined diameter. A discharge pipe 44a having a smaller diameter than the liquid distribution pipe 42b is attached to each of the discharge ports 44 diagonally downward. The discharge pipe 44a may not be provided, and the nutrient solution may be directly discharged from the discharge port 44.

Front sides of rectangular nutrient solution inflow plates 45 are arranged below the plurality of discharge ports 44 and the plurality of discharge pipes 44a. A rear end of the nutrient solution inflow plate 45 is located above the front side of the cultivation container 11, and is provided with a hole 45a. The nutrient solution discharged from the discharge pipe 44a flows through the nutrient solution inflow plate 45, and flows into the cultivation container 11 from the hole 45a. The nutrient solution inflow plate 45 is detachably attached to the plant cultivation device 1 and can be removed and cleaned. In the embodiment, the nutrient solution inflow plate 45 is inclined such that a rear end is lower than a front end.

The nutrient solution inflow plate 45 may not be provided, and the nutrient solution may flow directly into the cultivation container 11 from the discharge pipe 44a.

The nutrient solution collection groove 46 is a groove extending in a longitudinal direction below an elongated hole 13e of a lower tray 13 (which will be described below) of the cultivation container 11 on the front side of the cultivation room 10. Both ends of the nutrient solution collection groove 46 in the longitudinal direction are closed.

The groove extending portion 47 is a groove extending forward from a right end that is a downstream side of the nutrient solution collection groove 46, and guides the surplus nutrient solution flowing out from the nutrient solution collection groove 46 forward to cause it to flow out to a nutrient solution collection tube 48 extending downward from a hole 47a which opens to a bottom of a front end.

The nutrient solution collection groove 46, the groove extending portion 47, and the nutrient solution collection tube 48 are detachably attached to the plant cultivation device 1, and can be removed and cleaned.

The nutrient solution collection groove 46 and the groove extending portion 47 are preferably slightly inclined from the upstream side toward the downstream side, that is, a direction in which the nutrient solution flows.

Further, the nutrient solution collection groove 46, the groove extending portion 47 and the like are covered with a lid or the like such that light is not incident from the lighting device 20, and thus algae is prevented from growing.

The nutrient solution collection tank 49 is a bottomed container having a rectangular cross section. However, such a shape is not limited to the rectangular cross section, and may be other cross sections such as a circular cross section and the like. The nutrient solution collection tank 49 is arranged below of the nutrient solution collection tube 48, and the nutrient solution flowing from the nutrient solution collection tube 48 flows into such a tank.

Since the nutrient solution collection tank 49 is arranged at a position lower than the nutrient solution storage tank 41, the nutrient solution collection tank 49 is arranged in the lower space 3 below the plant cultivation device 1, for example, as shown in FIG. 1.

A pump 50 is arranged between the nutrient solution collection tank 49 and the nutrient solution storage tank 41, so that the nutrient solution in the nutrient solution collection tank 49 can be sent to the nutrient solution storage tank 41. The pump 50 is a pump of a predetermined type such as a centrifugal pump or an axial-flow pump, pumps up the nutrient solution collected in the nutrient solution collection tank 49, and sends the collected nutrient solution to the nutrient solution storage tank 41, thereby circulating the nutrient solution. The control unit 60 controls the pump 50 to operate supplying the nutrient solution to the nutrient solution storage tank 41 such that the height H3 of the liquid level of the nutrient solution in the nutrient solution storage tank 41 becomes a predetermined height.

### (Cultivation Container 11)

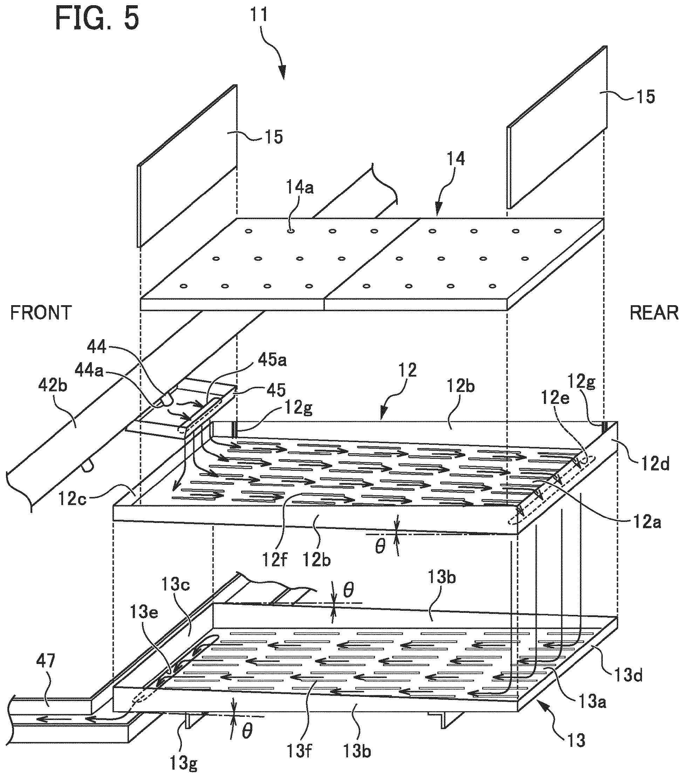

FIG. 5 is an exploded perspective view of the cultivation container 11. The cultivation container 11 includes an upper tray 12, a lower tray 13, two cultivation plates 14, and two partition plate 15.

The four cultivation containers 11 are horizontally arranged in the cultivation room 10 such that the cultivation plate 14 is fitted into the upper tray 12 in a state where the upper tray 12 attached with the partition plates 15 on both sides is stacked on the lower tray 13 and transverse directions thereof follow a left-right direction of the cultivation room 10 (see FIG. 1). However, the number of cultivation containers is not limited to four. In the embodiment, the cultivation container 11 has a shape satisfying a condition of a length in the transverse direction: a length in the longitudinal direction = 1 : 5, but is not limited thereto.

The lower tray 13 includes a rectangular bottom surface 13a, and two side walls 13b, a front wall 13c, and a rear wall 13d which surround corners of the bottom surface 13a. The front wall 13c is higher than the rear wall 13d. The side wall 13b has a trapezoidal shape in which the front side is high and the rear side is low. An elongated hole 13e is provided on the front side of the bottom surface 13a. When the cultivation container 11 is arranged in the cultivation room 10, the bottom surface 13a becomes an inclined surface whose front side is gradually lower than the rear side at an angle θ (θ being 0.5 degrees to 1 degree).

A plurality of ribs 13f parallel to each other are erected on an upper surface of the bottom surface 13a in the longitudinal direction (front-rear direction) of the bottom surface 13a. The ribs 13f are provided intermittently in the longitudinal direction of the bottom surface 13a. When the nutrient solution flows from the rear side to the front side of the bottom surface 13a as will be described below, since the nutrient solution flows between the ribs 13f along the ribs 13f, the nutrient solution flows uniformly without being accumulated in one side of the bottom surface 13a in the transverse direction.

A roller slide portion 13g having an L-shaped cross section and extending in the transverse direction is provided at a lower part of the lower tray 13.

Similarly to the lower tray 13, the upper tray 12 includes a rectangular bottom surface 12a, and two side walls 12b, a front wall 12c, and a rear wall 12d which surround corners of the bottom surface 12a. The upper tray 12 has an outer diameter substantially equal to that of the lower tray 13, and when the walls of the upper tray 12 are placed on the walls of the lower tray 13, a liquid flowing space is secured in the lower tray 13. The front wall 12c is higher than the rear wall 12d. The side wall 12b has a trapezoidal shape in which the front side is low and the rear side is high.

An elongated hole 12e is provided on the rear side of the bottom surface 12a. When the cultivation container 11 is arranged in the cultivation room 10, the bottom surface 12a becomes an inclined surface whose front side is gradually higher than the rear side at an angle θ (θ being 0.5 degrees to 1 degree).

Similarly to the bottom surface 13a, a plurality of ribs 12f parallel to each other are erected on an upper surface of the bottom surface 12a in the longitudinal direction (front-rear direction) of the bottom surface 12a. The ribs 12f are provided intermittently in the longitudinal direction of the bottom surface 13a.

When the nutrient solution flows from the front side to the rear side of the bottom surface 12a as will be described below, since the nutrient solution flows between the ribs 12f, the nutrient solution flows uniformly without being accumulated in one side of the bottom surface 12a in the transverse direction.

Further, partition plate holding grooves 12g extending up and down are provided in front of and behind an inner surface side of the side walls 12b on both sides.

The partition plates 15 are inserted and erected into the partition plate holding grooves 12g provided in front of and behind the inner surface side of the side walls 12b on both sides. A gap is provided between the partition plate 15 and the bottom surface 12a that do not contact with each other, and the nutrient solution can flow through the gap. The partition plate 15 prevents the grown plants from being contact with other members.

The cultivation plate 14 is made of foamed styrol or sponge, plant cultivation holes 14a are provided at predetermined intervals, and plants are planted in the plant cultivation holes 14a. The two cultivation plates 14 are separated into two plates having a size to be arranged between the front and rear partition plates 15 when the partition plates 15 are attached to the partition plate holding grooves 12g of the upper tray 12. However, the number of cultivation plates 14 arranged on one upper tray 12 may not be two or may be one, and the cultivation plate 14 may be divided in several.

### (Air Circulation System 30)

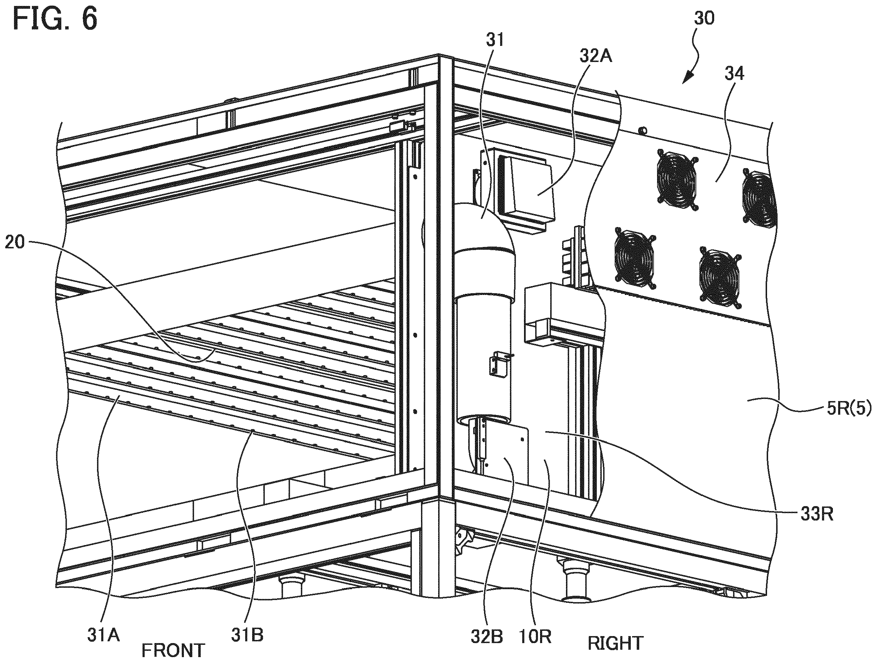

FIG. 6 is a partial perspective view of a portion of the plant cultivation device 1 related to the air circulation system 30. The gas circulation room 33R is provided between the right wall 10R and the right surface 5R of the outer wall 5.

A plurality of openings provided at regular intervals in the front-rear direction are formed on the right wall 10R of the cultivation room 10, and an exhaust fan 32A is attached to each of the openings. Further, an air conditioner 34, which is a Pelche type cooler, is attached to the right surface 5R of the outer wall 5 in the embodiment. Further, an air supply fan 32B is attached to a lower part from a front of the gas circulation room 33R.

As described above, all of the exhaust fan 32A, the air conditioner 34, and the air supply fan 32B in the air circulation system 30 are provided closer to the gas circulation room 33R. Therefore, maintenance work and the like of such components of the air circulation system 30 can be performed only by removal of the right surface 5 of the outer wall 5.

An air blowing duct 31 extends upward from the air supply fan 32B. The air blowing duct 31 is bent by about 90° at upper part, penetrates the hole provided in the right wall 10R, enters the cultivation room 10, and extends to the left and right on the front upper part of the cultivation room 10. A left end of the air blowing duct 31 is closed.

A plurality of air blowing pipes 31A extend rearward from the air blowing duct 31, and air is sent from the air blowing duct 31 to each of the air blowing pipes 31A. Each of the air blowing pipes 31A extends to a rear end of the cultivation room 10, and the end thereof is closed. Each of the air blowing pipes 31A corresponds to a row aligned in front of and behind the plant cultivation hole 14a provided in the cultivation plate 14, and extends above the row.

Further, as shown in FIG. 3, air blowing holes 31B are provided on a lower side of each of the air blowing pipes 31A. The air blowing holes 31B correspond to the positions of the plant cultivation holes 14a, and one air blowing hole 31B is provided above one plant cultivation hole 14a in the embodiment.

The air circulation system 30 is constructed by the exhaust fan 32A, the gas circulation room 33R, the air conditioner 34, the air supply fan 32B, the air blowing duct 31, the air blowing pipe 31A, and the air blowing hole 31B described above.

Air is exhausted from the cultivation room 10 to the gas circulation room 33R by the exhaust fan 32A serving as a first air flow path by the air circulation system 30, and the air exhausted to the gas circulation room 33R is cooled by the air conditioner 34. The cooled air is supplied to the air blowing duct 31 in the cultivation room 10 by the air supply fan 32B. The air supplied to the air blowing duct 31 flows through the air blowing duct 31, and is sent from the air blowing duct 31 to the air blowing pipe 31A. The air sent to the air blowing pipe 31A is jetted downward from the air blowing holes 31B. The jetted air is blown from above to a plant V directly below.

In the embodiment, since the Pelche type cooler is used as the air conditioner 34, the variation in cooling effect is small, and the air conditioner 34 is small.

### (Lighting Device 20)

The lighting device 20 is an artificial light source arranged in the upper part of the cultivation room 10. In the present embodiment, a plurality of lighting devices 20 are arranged in parallel with the air blowing pipe 31A so as to extend from the front to the rear of the cultivation room 10, and irradiate the plants planted in the cultivation room 10 with light. As the lighting device 20, an LED (light emitting diode) is preferably used that has small power consumption and can be configured to be thin. Further, a fluorescent lamp may be used as an artificial light source. The lighting device 20 is controlled by the control unit 60, and is turned ON/OFF by a switch provided in the operation unit 61.

The lighting device 20 is located at the upper part of the cultivation room 10 and is arranged at the height substantially equal to that of the air blowing pipe 31A, and in the embodiment, the lighting device 20 and the air blowing pipe 31A are arranged parallel to each other and are arranged substantially alternately.

However, the present invention is not limited thereto, and the lighting device 20 and the air blowing pipe 31A may be arranged so as to intersect with each other.

In the embodiment, the exhaust fan 32A is attached above the air blowing pipe 31A and the lighting device 20 on the right wall 10R. However, the exhaust fan 32A may be attached at the central part or the lower part other than the upper part of the right wall 10R.

### (Control Unit 60)

The operation of the plant cultivation device 1 is controlled by the control unit 60. The control unit 60 is configured by, for example, a general-purpose personal computer, a computer for factory automation, or a programmable controller.

The operation unit 61 is configured by buttons and a keyboard for setting the inside of the cultivation room 10 to be in a predetermined cultivation environment, and is arranged on the outer wall 5 of the cultivation room 10.

The display unit 62 is configured by a liquid crystal panel to display measurement results monitored by various sensors including a load measuring device 70 to be described below in the cultivation room 10 and the predetermined cultivation environment set by the operation unit 61, and is arranged on the outer wall 5 of the cultivation room 10.

The operation unit 61, the control unit 60, and the display unit 62 may be configured separately from the plant cultivation device 1 instead of being configured integrally with the plant cultivation device 1. In this case, a control panel including an operation unit, a control unit, and a display unit are arranged at a predetermined position in the plant factory, and the cultivation environment in each of the plurality of cultivation chambers 4 of the plant cultivation device 1 may be centrally governed by such a control panel.

### (Transport Mechanism 80, Load measuring device 70)

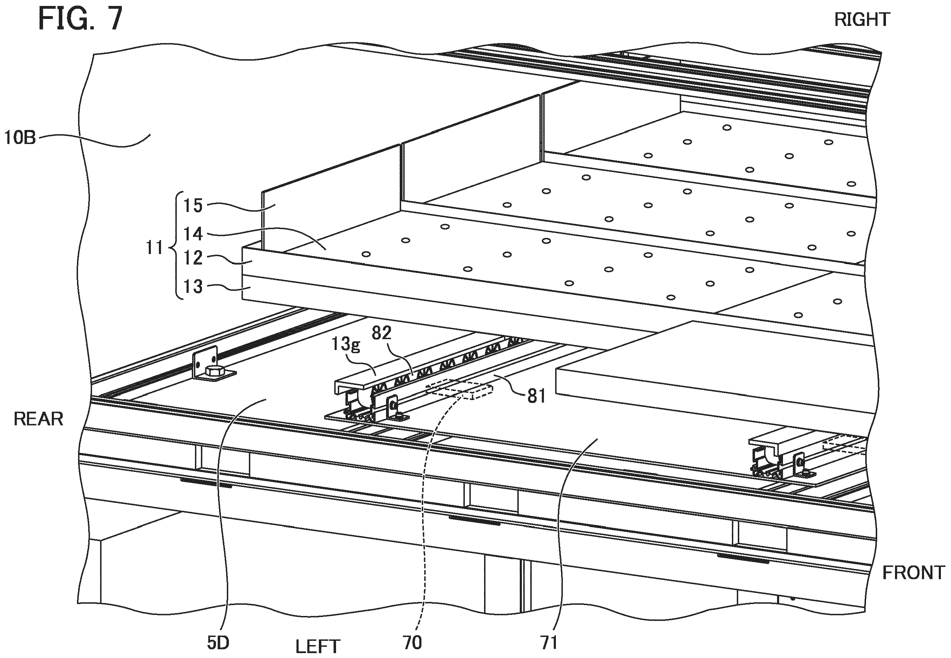

The plant cultivation device 1 further includes a transport mechanism 80 for transporting the cultivation container 11 and a load measuring device 70 for measuring a load of the plant V being cultivated. FIG. 7 is a perspective view showing the transport mechanism 80 and the load measuring device 70 of the plant cultivation device 1, and is partially cut out such that the transport mechanism 80 can be seen.

The load measuring devices 70 such as load cells are provided at four places (only one place in the drawing) on the bottom surface 5D of the cultivation room 10. One rectangular plate member 71 is placed on the four load measuring devices 70. The load measuring device 70 can measure a load of an object placed on the plate member 71, and the measured information can be sent to the control unit 60 and can be displayed by the display unit 62. Roller holding portions 81 extending to the left and right are attached to front and rear edges on the plate member 71. A plurality of rollers 82 are arranged in a row on the roller holding portion 81. An axis of rotation of each of the rollers 82 faces back and forth. The roller slide portion 13g of the lower tray 13 described above is placed on the row of the rollers 82.

Thus, the lower tray 13 to which the roller slide portion 13g is fixed, that is, the cultivation container 11 can slide in the left-right direction in which the rollers 82 are lined up. Therefore, the left surface 5L of the outer wall 5 shown in FIG. 1 can be removed, and the grown plant V can be taken out together with the cultivation container 11 from the left side of the cultivation room 10.

In addition, since the cultivation container 11 in which the plant V is cultivated is placed on the plate member 71 through the roller 82 and the roller holding portion 81, the load of the plant V can be measured together with the cultivation container 11 by the load measuring device 70.

The plant cultivation device 1 of the embodiment operates as follows.

### (Lighting Device 20)

The control unit 60 controls the lighting device 20 to irradiate the plants with light such that a luminous flux, illuminance, distribution of wavelengths of the irradiating light are set to predetermined values.

### (Nutrient Solution Circulation System 40)

The control unit 60 controls the pump 50 to supply the nutrient solution to the nutrient solution storage tank 41 such that the liquid level of the nutrient solution in the nutrient solution storage tank 41 is at a predetermined height, based on the signal indicating the height of the liquid level of the nutrient solution stored in the nutrient solution storage tank 41 and supplied from the water level sensor 41a.

The nutrient solution stored in the nutrient solution storage tank 41 flows into the nutrient solution supply pipe 42 extending horizontally.

According to the embodiment, compared with the case of being pumped by the pump, the nutrient solution in the nutrient solution supply pipe 42 is small in pressure difference between the upstream side and the downstream side, and the height H2 of the liquid level of the nutrient solution in the rising portion 42c being open to the atmosphere is substantially equal to the height H3 of the liquid level of the nutrient solution in the nutrient solution storage tank 41. Since the pressure of the nutrient solution is substantially constant in the liquid distribution pipe 42b, the nutrient solution can be discharged at the same pressure from each of the plurality of discharge ports 44 due to the difference in water level from the height H3 of the nutrient solution in the nutrient solution storage tank 41. Accordingly, the flow rate of the nutrient solution can be easily made substantially constant.

Further, when the nutrient solution flows into the nutrient solution supply pipe 42, the air in the nutrient solution supply pipe 42 is driven out to the pipe end, but since the rising portion 42c is open to the atmosphere, the air in the nutrient solution supply pipe 42 does not be accumulated at the pipe end.

Therefore, the nutrient solution can flow into the nutrient solution supply pipe 42, and the nutrient solution can uniformly flow out from each of the discharge ports 44 at the same time.

Since the pump 50 is used for pumping the nutrient solution and does not pump the nutrient solution into the nutrient solution supply pipe 42, the nutrient solution can be supplied to the plant cultivation device 1 with less energy.

In addition, the control unit 60 can control of the operation timing of the pump 50 and adjust the height H3 of the liquid level of the nutrient solution in the nutrient solution storage tank 41. Then, when the height H3 is adjusted, it is possible to change the amount of nutrient solution discharged from each of the discharge ports 44 per unit time.

It is possible to change the amount of nutrient solution to be discharged per unit time by change of the smaller diameter of the inner diameter of the discharge port 44 or the inner diameter of the discharge pipe 44a.

The nutrient solution discharged from each of the discharge pipes 44a flows into the nutrient solution inflow plate 45. Then, the nutrient solution discharged from one discharge pipe 44a flows through the nutrient solution inflow plate 45, and flows into the cultivation container 11 from the hole 45a.

The nutrient solution flowing into the cultivation container 11 is absorbed by the plant V planted on the cultivation plate 14 while flowing from the front side to the rear side along the inclined bottom surface 12a of the upper tray 12. At this time, since the nutrient solution flows between the ribs 12f, the nutrient solution can uniformly flow without being accumulated on one side of the bottom surface 12a in the transverse direction. Therefore, the nutrient solution does not stagnate.

The surplus nutrient solution not absorbed by the plant V flows out from the elongated hole 12e of the upper tray 12 onto the lower tray 13. The nutrient solution flowing into the lower tray 13 flows from the rear side to the front side along the inclined bottom surface 13a of the lower tray 13. At this time, since the nutrient solution flows between the ribs 13f along the ribs 13f, the nutrient solution can uniformly flow without being accumulated on one side of the bottom surface 13a in the transverse direction.

Then, the nutrient solution flows out from the elongated hole 13e of the lower tray 13 to the nutrient solution collection groove 46. Therefore, the nutrient solution does not stagnate in the cultivation container 11.

Further, since the partition plates 15 are erected on the front and rear of the cultivation container 11, when the plant V grows and becomes large in size, the partition plate 15 prevents the grown plant from contacting with other members.

The surplus nutrient solution flowing out into the nutrient solution collection groove 46 flows forward through the corresponding groove extending portion 47, and flows into the nutrient solution collection tube 48 below from the hole 47a. Then, the nutrient solution flows through the nutrient solution collection tube 48, flows out from the downstream side of the nutrient solution collection tube 48, and is collected in the nutrient solution collection tank 49. As for the nutrient solution collected in the nutrient solution collection tank 49, the concentration of the nutrient solution is measured by a sensor (not shown), and the concentration of the nutrient solution is adjusted to an appropriate optimum concentration by the control unit.

The nutrient solution collection tube 48 uses a U-shaped pipe to maintain closability of the cultivation chamber 4, and thus outside air do not flow in from the nutrient solution collection tube 48.

The height of the liquid level of the nutrient solution in the nutrient solution storage tank 41 is appropriately measured by the water level sensor 41a. The control unit 60 controls the pump 50 to supply the nutrient solution to the nutrient solution storage tank 41 such that the height of the liquid level of the nutrient solution in the nutrient solution storage tank 41 is at the predetermined height, based on the signal indicating the height of the liquid level thereof.

The nutrient solution supplied to the nutrient solution storage tank 41 flows into the nutrient solution supply pipe 42 again to be circulated.

In the embodiment, the nutrient solution supply path 42 and the nutrient solution collection paths 46, 47, and 48 are arranged on one surface side (the front surface side in the embodiment) of the cultivation room 10. Therefore, maintenance work such as inspection of the flow of nutrient solution or inspection of the electric system can be performed only by removal of the outer wall 5 on the front side.

On the other hand, when a part of the pipe of the nutrient solution circulation system 40 is arranged not only on the front surface but also on the rear surface and the side surface of the plant cultivation device 1, during the maintenance of the plant cultivation device 1, it is necessary to remove the outer wall 5 in addition to the front surface and it also takes time for maintenance.

However, in the embodiment, the maintenance may be sufficiently performed only by the removal of the outer wall 5 on the front side. Accordingly, the maintenance is easy.

### (Air Circulation System 30)

When the exhaust fan 32A is operated by the control unit 60, the air in the cultivation room 10 is exhausted to the gas circulation room 33R by the exhaust fan 32A serving as the first air flow path of the air circulation system 30.

A temperature sensor and a humidity sensor, which are not shown, are attached to predetermined locations of the cultivation room 10 to monitor the temperature of the air in a fluid circulation room 33. The control unit 60 controls the air conditioner 34 based on the temperature of the air around the plants, and appropriately adjusts the temperature of the air in the fluid circulation room 33.

The air adjusted to the appropriate temperature is supplied to the air blowing duct 31 in the cultivation room 10 by the air supply fan 32B, and is sent from the air blowing duct 31 to the air blowing pipe 31A. The air sent to the air blowing pipe 31A is blown out downward from the air blowing hole 31B. The jetted air is blown out from above to the plant V directly below.

In the embodiment, the air circulation system 30 including the exhaust fan 32A and the air supply fan 32B is arranged in the gas circulation room 33R on one surface side (the right surface side in the embodiment) of the cultivation room 10.

Therefore, all maintenance work such as inspection of the flow of air and inspection of the electric system of the air circulation system 30 related to the air circulation system 30 can be performed only by removal of the right surface 5R of the outer wall 5, and thus the maintenance is easy.

Further, in a general plant cultivation device, unlike the present embodiment, an air flow in a lateral direction is generated in the cultivation room 10, and the wind blows against the plant in the lateral direction. Then, the wind blows against outer leaves of the plants, transpiration of water from the outer leaves increases, the solution absorbed from the roots of the plants is sent to the outer leaves in large quantities, and thus calcium contained in the nutrient solution is also distributed to the outer leaves in large quantities.

However, in particular, spherical head vegetables, such as Chinese cabbage, cabbage, and lettuce, having leaves rolled up one by one or semi-head vegetables, such as leaf lettuce, having loosely rolled leaves and having semi-head leaves without complete head leaves have new leaves growing from the center, but these new leaves are covered with outer leaves.

Therefore, in a general plant growing device in which an air flow is generated in the lateral direction, the wind does not blow against the central leaves. Then, in the central new leaves compared with the outer leaves, the transpiration less occurs and calcium is lack due to the lack of supply of the nutrient solution, whereby cell necrosis may be caused to cause a tipburn and it is more likely to cause rot of a root.

In particular, in the plant cultivation device, the temperature and lighting in the cultivation room and the nutrient solution to be supplied are controlled to promote the growth of the plants. For this reason, in the plant cultivation device, the plants grow faster than in the natural state, and it is more likely that the central leaves are not sufficiently supplied with nutrients.

However, in the embodiment, air is blown out from directly above the plant V. Then, the wind can blow against the central new growing leaves, the transpiration from the growing leaves is promoted, and a large amount of nutrient solution is supplied. Thus, calcium is sufficiently supplied to the growing leaves. Therefore, calcium is supplied to tips of the growing leaves, and tipburn is less likely to occur.

In the embodiment, the exhaust fan 32A is attached above the air blowing pipe 31A and the lighting device 20 on the right wall 10R. After the air sent downward from the air blowing hole 31B of the air blowing pipe 31A is blown onto the plant V, the air makes a turn upward, passes between the lighting devices 20, rises above the lighting device 20, and is exhausted by the exhaust fan 32A.

The lighting device 20 generates heat during lighting, but since the air passes between the lighting device 20, the lighting device 20 can be cooled.

Further, the lighting device 20 is arranged at the height substantially equal to that of the air blowing pipe 31A, so that the lighting from the lighting device 20 is not blocked by the air blowing pipe 31A.

In addition, the cooling of the lighting device 20 is performed by the air already blown to the plant V, and since the influence of the heating of the air blown from the air blowing pipe 31A before being blown to the plant V due to the heat generated from the lighting device 20 is small, it is easy to control the temperature of the air blown to the plant V.

### (Load Measuring Device 70)

Further, since the cultivation container 11 in which the plant V is cultivated is placed on the plate member 71 through the roller 82 and the roller holding portion 81, the load of the plant V can be measured together with the cultivation container 11 by the load measuring device 70.

Since the measurement result of the load measuring device 70 is sent to the control unit 60 and continuous load measurement is possible, the growth state of the plant V can be governed by the load, and an appropriate harvest time can be grasped.

Further, since the cultivation chamber 4 of the embodiment is closed to the outside, the temperature and humidity in the cultivation chamber 4 (cultivation room 10) can be governed without being affected by the temperature and humidity inside the plant factory. Therefore, the environment inside the cultivation chamber 4 can be set independently of the environment of the work room. Accordingly, it is not necessary for plants and humans to coexist unlike a work room in a conventional plant factory. Therefore, for example, the environment in the cultivation chamber 4 is not suitable for the human body, but can be set to the optimum cultivation conditions for the plants.

### (Modification)

Although the preferred embodiment of the present invention has been described above, the present invention is not limited to the embodiment.

For example, in the embodiment, the nutrient solution storage tank 41 and the nutrient solution collection tank 49 are provided separately, but these tanks may be provided integrally.

The embodiment is configured in which the nutrient solution is circulated from the nutrient solution collection tank 49 to the nutrient solution storage tank 41 by the pump 50, but the collected nutrient solution is drained without the nutrient solution collection tank, and only the nutrient solution storage tank may be provided.

For example, the cultivation container may be configured by one tray instead of the configuration in which the upper tray and the lower tray are provided. In this case, for example, the inside of one tray may be separated into two left and right parts in which one part is inclined such that the nutrient solution flows from the front side to the rear side and the other part is configured such that the nutrient solution flows from the rear side to the front side. Further, the tray may be partitioned into a central part and an end such that the nutrient solution flows reciprocatively through the tray in a T-shape.

Further, the embodiment has the configuration in which the tray is provided with an inclination to promote the flow of the nutrient solution, but the bottom surface of the tray may not be provided with an inclination.

In addition, the flow method of the nutrient solution storage tank does not matter as long as the liquid circulates between the nutrient solution storage tank and the cultivation container. The embodiment has the configuration in which the nutrient solution storage tank is open to the atmosphere and the nutrient solution flows at atmospheric pressure, but the invention is not limited thereto, and the nutrient solution may flow by a pump without opening to the atmosphere.

### (Second Embodiment)

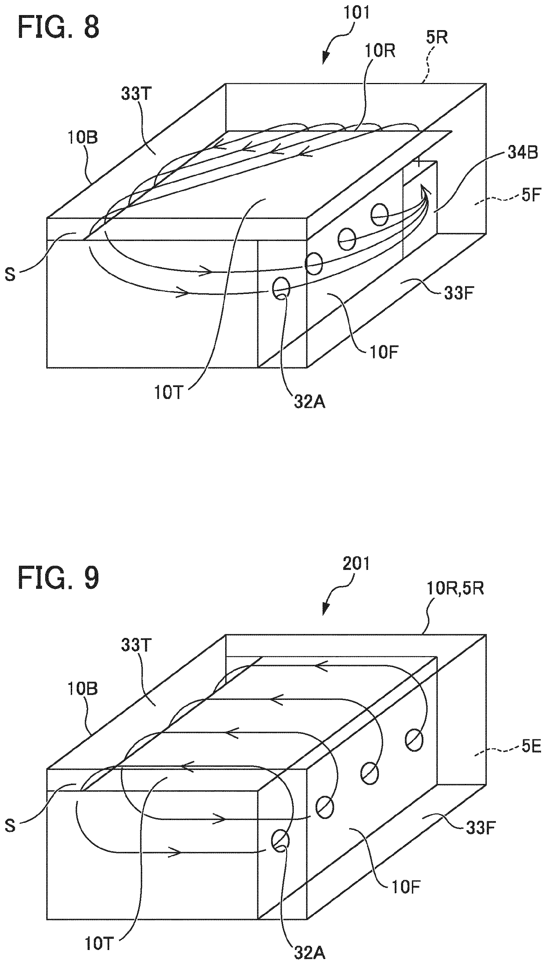

FIG. 8 is a schematic diagram of a plant cultivation device 101 of a second embodiment. The plant cultivation device 101 of the second embodiment includes, as an air circulation system, a second air flow path through which air flows in a cultivation room 10 in a lateral direction in addition to the first air flow path, through which the air flows to the plant V from above as described in the first embodiment. Since other configurations are the same as those in the first embodiment, such configurations will not be described and shown, and the common components are designated by the same reference numerals.

An air supply fan 32B in the first air flow path may be arranged in a right gas circulation room 33R as in the first embodiment, or may be arranged in a nutrient solution circulation room 33F.

The second air flow path includes three circulation rooms, for example, a nutrient solution circulation room 33F between a front wall 10F of the cultivation room 10 and a front surface 5F of an outer wall 5, a right gas circulation room 33R between a right wall 10R of the cultivation room 10 and a right surface 5R of the outer wall 5, and an upper gas circulation room 33T between an upper wall 10T of the cultivation room 10 and an upper surface 5T of the outer wall 5. A plurality of exhaust fans 32A are attached to the front wall 10F of the cultivation room 10.

The nutrient solution circulation room 33F communicates with the right gas circulation room 33R, and the right gas circulation room 33R communicates with the upper gas circulation room 33T.

The upper wall 10T of the cultivation room 10 does not extend until contacting with the rear wall 10B, and a gap S penetrating in an up-down direction is provided between the upper wall 10T and the rear wall 10B. The gap S is an air inflow port through which air flows into the cultivation room 10.

Further, a second air conditioner 34B is arranged in the right gas circulation room 33R to govern the temperature, the humidity, and the amount of carbon dioxide or oxygen of the air around the plants. However, as in the first embodiment, only the air conditioner 34 may be provided to perform cooling without the second air conditioner 34B.

When the exhaust fan 32A is operated by the control unit 60, the air in the cultivation room 10 flows out to the nutrient solution circulation room 33F by the exhaust fan 32A. The outflowed air flows to the right gas circulation room 33R, and is sent to the upper gas circulation room 33T after the temperature, the humidity, and the amount of carbon dioxide or oxygen of the air are adjusted by the air conditioner 34B arranged in the right gas circulation room 33R. The air sent to the upper gas circulation room 33T flows into the cultivation room 10 through the gap S. The air flows in the cultivation room 10 in the lateral direction, and flows out to the nutrient solution circulation room 33F by the exhaust fan 32A to be circulated.

According to the second embodiment, the following effects can be obtained in addition to the effects of the first embodiment.

Since the second air flow path does not pass through the hole having a smaller diameter such as the air blowing hole 31B as in the first embodiment, a large amount of air can be circulated compared with the first air and the air in the cultivation room 10 can be circulated faster. Therefore, control of the environment around the plants can be maintained in a desired state more quickly. Accordingly, it is possible to reduce changes in environment (changes in temperature and humidity) in the cultivation room 10. As a result, the optimum and homogeneous cultivation environment for the growth of the plants can be maintained, and productivity of the plant factory can be improved.

### (Third Embodiment)

FIG. 9 is a schematic diagram of a plant cultivation device 201 of a third embodiment. The third embodiment is similar to the second embodiment except that a direction of a second air flow path through which air flows in a cultivation room 10 in a lateral direction is different, and thus the same configurations will not be described and shown.

Unlike the second embodiment, the second air flow path does not include the right gas circulation room 33R between the right wall 10R of the cultivation room 10 and the right surface 5R of the outer wall 5, and includes two air circulation rooms, for example, a nutrient solution circulation room 33F between the front wall 10F and the front surface 5F of the outer wall 5 and an upper gas circulation room 33T between the upper wall 10T of the cultivation room 10 and the upper surface 5T of the outer wall 5. Then, an exhaust fan 32A is attached to the front wall 10F of the cultivation room 10.

The nutrient solution circulation room 33F communicates with the upper gas circulation room 33T. In addition, the upper wall 10T of the cultivation room 10 does not extend up to the rear wall 10B, and a gap S penetrating in an up-down direction is provided between the upper wall 10T and the rear wall 10B. The gap S is an air inflow port through which air flows into the cultivation room 10.

### (Air Flow in Second Air Flow Path)

When the exhaust fan 32A is operated by the control unit 60, the air in the cultivation room 10 flows out to the nutrient solution circulation room 33F by the exhaust fan 32. The air flowing out to the nutrient solution circulation room 33F is sent to the upper gas circulation room 33T after the temperature, the humidity, and the amount of carbon dioxide or oxygen of the air are adjusted by the air conditioner 34B.

The air sent to the upper gas circulation room 33T flows into the cultivation room 10 through the gap S. The air flows in the cultivation room 10 in the lateral direction, and flows out to the nutrient solution circulation room 33F by the exhaust fan 32A to be circulated.

Also in the third embodiment, since the second air flow path does not pass through the hole having a smaller diameter such as the air blowing hole 31B as in the second embodiment, a large amount of air can be circulated compared with the first air and the air in the cultivation room 10 can be circulated faster. Therefore, control of the environment around the plants can be maintained in a desired state more accurately and more quickly.

### EXPLANATION OF REFERENCE NUMERALS

- V: plant
- 1, 101, 201: plant cultivation device
- 4: cultivation chamber
- 5: outer wall
- 5D: bottom surface
- 5F: front surface
- 5L: left surface
- 5R: right surface
- 5T: upper surface
- 10: cultivation room
- 10B: rear wall
- 10F: front wall
- 10R: right wall
- 11: cultivation container
- 14: cultivation plate
- 14a: plant cultivation hole
- 20: lighting device
- 30: air circulation system
- 31: air blowing duct
- 31A: air blowing pipe
- 31B: air blowing hole
- 32A: exhaust fan
- 32B: air supply fan
- 33F: nutrient solution circulation room
- 33R: gas circulation room
- 34: air conditioner
- 34B: second air conditioner
- 40: nutrient solution circulation system
- 41: nutrient solution storage tank
- 49: nutrient solution collection tank
- 50: pump
- 60: control unit
- 70: load measuring device
- 80: transport mechanism

## Claims

1. A plant cultivation device that is an artificial light-type plant cultivation device, the plant cultivation device comprising a cultivation chamber having a closable inside,
the cultivation chamber comprising therein:
a cultivation room for cultivating plants; and
an air circulation system that generates an air flow flowing from top to bottom in the cultivation room.

2. The plant cultivation device according to claim 1, further comprising
a lighting device that illuminates the cultivation room, wherein
the air circulation system comprises
an exhaust fan that exhausts air from the cultivation room,
an air supply fan that supplies the air to the cultivation room, and
a plurality of air blowing pipes extending on an upper part of the cultivation room and provided with a plurality of air blowing holes for jetting the air supplied from the air supply fan from an upper side toward a lower side of the cultivation room.

3. The plant cultivation device according to claim 2, wherein
the air circulation system includes a gas circulation room provided inside the cultivation chamber,
the exhaust fan exhausts air from the cultivation room to the gas circulation room, and
the air supply fan supplies air from the gas circulation room to the cultivation room.

4. The plant cultivation device according to claim 3, wherein
the air circulation system further includes an air conditioner that adjusts the air in the gas circulation room, and
the exhaust fan, the air conditioner, and the air supply fan are arranged on one surface side of the cultivation room.

5. The plant cultivation device according to any one of claims 2 to 4, wherein
the lighting device and the air blowing pipes are arranged at the same height.

6. The plant cultivation device according to claim 5, wherein
the exhaust fan is provided above the lighting device and the air blowing pipes in the cultivation room.

7. The plant cultivation device according to any one of claims 2 to 6, wherein
the cultivation room is provided with a cultivation plate having a plurality of plant cultivation holes, and
the air blowing holes correspond to the plant cultivation holes, respectively, and are arranged above the plant cultivation holes.

8. The plant cultivation device according to any one of claims 1 to 7, wherein the cultivation room is provided with
a cultivation container, and
a load measuring device that measures a load of the cultivation container while the plants are cultivated.

9. The plant cultivation device according to any one of claims 1 to 8, further comprising a liquid circulation system that circulates a liquid supplied to the cultivation room, wherein
the liquid circulation system includes
a liquid supply path through which a liquid flows into the cultivation room, and
a liquid collection path through which the liquid collected from the cultivation room is collected, and
the liquid supply path and the liquid collection path are arranged on one surface side of the cultivation room.
